# EUROPEAN PATENT SPECIFICATION

(11) **EP 3 988 974 B1**
(45) Date of publication and mention of the grant of the patent: **29.10.2025**
(21) Application number: 19934027.4
(22) Date of filing: 04.12.2019
(51) Int. Cl.: G02B 6/293, G02B 6/42, G02F 1/025

(54) **MODULATION CHIP AND LIGHT EMISSION MODULE**
MODULATIONSCHIP UND LICHTEMISSIONSMODUL
PUCE DE MODULATION ET MODULE D'ÉMISSION DE LUMIÈRE

(30) Priority: 21.06.2019 CN 201910544499
(43) Date of publication of application: 27.04.2022
(73) Proprietor: Accelink Technologies Co., Ltd, Wuhan City, Hubei 430074 (CN)
(72) Inventor: ZHAO, Minglu, Wuhan City, Hubei 430074 (CN); ZHANG, Ji, Wuhan City, Hubei 430074 (CN); LIANG, Xuerui, Wuhan City, Hubei 430074 (CN); WU, Fan, Wuhan City, Hubei 430074 (CN)
(74) Representative: Frenkel, Matthias Alexander
(86) International application number: PCT/CN2019/123004
(87) International publication number: WO 2020/253137

(56) References cited:
- CN-A- 101 980 460
- CN-A- 104 297 947
- CN-A- 105 515 677
- CN-A- 109 143 466
- CN-A- 109 416 439
- CN-A- 109 471 219
- CN-A- 110 308 521
- US-A1- 2002 154 847

## Description

### CROSS-REFERENCE

The present disclosure claims the benefit of, and priority to Chinese Patent Application No. 201910544499.5 filed on June 21, 2019.

### TECHNICAL FIELD OF THE DISCLOSURE

The present disclosure relates to the field of optical communication optoelectronic devices, and in particular, to a modulation chip and a light emission module.

### BACKGROUND

Silicon photonics integration technology combines microelectronics and optoelectronics to form silicon-based optoelectronic hybrid integrated chips and devices, so as to give full play to the advantages of advanced and mature process technology, high integration, and low cost in the silicon-based microelectronics, and has broad market prospects.

As an application, silicon photonics technology is also an important key technology in low-cost light emission modules. Generally speaking, the light emission module needs to operate at some specific wavelengths, and the emitted light can be combined into the optical fiber for transmission. However, at present, since the refractive index of silicon is very sensitive to temperature, the center wavelength of the multiplexer-demultiplexer made of silicon light will shift without temperature control, and the tolerance of coupling alignment is very low due to the very small sizes of the multiplexer-demultiplexer, which leads to the failure of the fabricated silicon light emission module to realize the coupling alignment of the optical path.

Chinese patent application publication No. CN101980460A relates to a monolithically integrated multi-wavelength differential quadrature phase shift keying (DQPSK) demodulator and a manufacturing method thereof. The demodulator is provided with a 1*D wavelength division demultiplexer and D DQPSK demodulators which are integrated on the same waveguide substrate to form a waveguide structure chip. The method comprises the following steps of: monolithically integrating the wavelength division demultiplexer AWG and a plurality of multi-wavelength optical DQPSK demodulators with delay line interferometers on the same waveguide substrate by planar optical waveguide technology to manufacture the waveguide structure chip; manufacturing a metal film micro-heater on one of two arms of each optical delay line interferometer forming the DQPSK demodulator by a photoetching, sputtering and stripping semiconductor process to realize phase control; adhering a thermoelectric cooler (TEC) to a chip substrate to control the temperature of the whole chip; and respectively connecting the metal film micro-heater and the TEC with an error signal from a control feedback loop. The DQPSK demodulator has low cost, the process is simple and the method contributes to mass production.

Chinese patent application publication No. CN 109416439 A provides an arrayed waveguide grating (AWG) device for use in an optical transceiver is disclosed, and can demultiplex an optical signal into N number of channel wavelengths. The AWG device can include an AWG chip, with the AWG chip providing a planar lightwave (PLC) circuit configured to demultiplex channel wavelengths and launch the same into output waveguides. A region of the AWG chip may be tapered such that light traveling via the output waveguides encounters an angled surface of the tapered region and reflects towards an output interface region of the AWG chip. Thus detector devices may optically couple to the output interface region of the AWG chip directly, and can avoid losses introduced by other approaches which couple an output of an AWG to detectors by way of a fiber array or other intermediate device.

Chinese patent application publication No. CN 109143466 A provides a hybrid integrated silicon optical chip, an optical device, and a chip manufacturing method. The chip comprises a silicon substrate, a silicon dioxide cladding layer arranged on the silicon substrate, a semiconductor laser chip, a first hybrid integrated waveguide, an optical signal processing unit, and a second hybrid integrated waveguide, wherein the semiconductor laser chip, the first hybrid integrated waveguide, the optical signal processing unit, and the second hybrid integrated waveguide are integrated in the silicon dioxide cladding layer and are arranged on the silicon substrate respectively. The optical signal processing unit that is connected with the first hybrid integrated waveguide through a first silicon waveguide and is connected with the second hybrid integrated waveguide through a second silicon waveguide is used for carrying out modulation/demodulation and wave division/wave synthesis processing on optical signals. The first hybrid integrated waveguide includes one or more Si3N4 waveguides for semiconductor laser chip coupling; and the second hybrid integrated waveguide includes one or more Si3N4 waveguides for single-mode fiber coupling. The chip has the high coupling efficiency and high coupling tolerance.

Chinese patent application publication No. CN 109471219 A provides an AWG chip, a manufacturing method and an adjusting method thereof. The adjusting method of the central wavelength of the AWG chip comprises the following steps: determining a reference wavelength of the AWG chip at a preset adjusting temperature according to the preset adjusting temperature and a target operating temperature of the AWG chip; calibrating the wavelength of the AWG chip according to the reference wavelength so that the center wavelength of the AWG chip at the preset adjusting temperature corresponds to the reference wavelength; and controlling the temperature of the AWG chip according to the target working temperature of the AWG chip so that the center wavelength of the AWG chip at the target working temperature is aligned with the standard wavelength. The adjusting method is accurate in adjusting precision and high in efficiency; and the mechanical temperature compensation device is not added, so that the reliability can be effectively improved.

US patent application publication No. US 2002154847 A provides an optical component which is formed on a silicon on insulator (SOI) substrate and has an array waveguide that demultiplexes an input light signal into N channels and provides that light signal to a corresponding set of N waveguide structures formed on a surface of the SOI substrate. The N waveguide structures provide the N channels of light to N optical detectors. Each optical detector is bonded to a surface of a corresponding one of the waveguide structures. The N channels of light pass through the N waveguide structures and are coupled into the N optical detectors so that light from a corresponding channel of the array waveguide is coupled into a corresponding optical detector and converted into an electrical signal.

### SUMMARY

In view of the above, embodiments of the present disclosure are expected to provide a modulation chip and a light emission module, thereby improving the coupling efficiency of the optical path and effectively reducing the cost of the module.

In order to achieve the above objects, the technical schemes of the embodiments of the present disclosure is performed as follows.

An embodiment of the present disclosure provides a modulation chip comprising a multiplexer-demultiplexer and a silicon light modulator, wherein
the multiplexer-demultiplexer is configured to receive a first optical signal, process the first optical signal to obtain one second optical signal including at least one preset wavelength, and output the one second optical signal; the first optical signal is a light wave including at least one wavelength; and
the silicon light modulator is configured to receive the one second optical signal, perform frequency modulation on the one second optical signal, and output the one second optical signal that has been performed the frequency modulation.

Preferably, the multiplexer-demultiplexer comprises at least one first-type coupler and at least one second-type coupler; an amount of the first-type coupler is the same with that of the second-type coupler;
the first-type coupler is configured to receive the first optical signal, and decompose the first optical signal into an optical signal of at least one preset wavelength; and
the second-type coupler is configured to receive the optical signal having the at least one preset wavelength, synthesize the optical signal of the at least one preset wavelength to obtain the second optical signal, and output the second optical signal.

Preferably, the multiplexer-demultiplexer further comprises an array waveguide; and
the array waveguide is located between the first-type coupler and the second-type coupler and is configured to transmit the optical signal of the at least one preset wavelength; wherein the first-type coupler and the second-type coupler are mirror images of each other.

Preferably, the first-type coupler and the second-type coupler both adopt a Rowland circle structure which at least comprises two ports;
a first port of the two ports of the first-type coupler or the second-type coupler is connected with an input/output waveguide; a second port of the two ports of the first-type coupler or the second-type coupler is connected with the array waveguide; and the input/output waveguide is configured to transmit optical signals.

Preferably, the modulation chip further comprises a conductive component which is located between the multiplexer-demultiplexer and the silicon light modulator, and is configured to couple the second optical signal output by the multiplexer-demultiplexer into the silicon light modulator.

Preferably, the conducive component comprises at least a lens and/or at least a waveguide.

An embodiment of the present disclosure also provides a light emission module which comprises the modulation chip described in any one of the above.

Preferably, the light emission module further comprises a laser chip, a temperature controller and a substrate; wherein
the laser chip and the modulation chip both are located on an upper surface of the substrate; the temperature controller is located on a lower surface of the substrate; and the laser chip is located on a first side of the modulation chip.

Preferably, the laser chip is configured to emit a first optical signal;
the modulation chip is configured to receive the first optical signal and output a second optical signal that has been performed the frequency modulation; and
the temperature controller is configured to control temperature of the laser chip and the silicon light modulator, so as to keep the wavelength of the optical signal stable.

Preferably, the light emission module further comprises a collimating lens which is located on a second side of the modulation chip, and is configured to receive the second optical signal that has been performed the frequency modulation and convert the second optical signal that has been performed the frequency modulation into collimated light for output, wherein the first side is different from the second side.

Preferably, the light emission module further comprises at least a converging lens; and
the converging lens is located between the laser chip and the modulation chip, and is configured to couple the first optical signal emitted by the laser chip into the modulation chip.

In a modulation chip and an optical transmission module provided by the embodiments of the present disclosure, a modulation chip is formed by using a multiplexer-demultiplexer and a silicon light modulator, and the first optical signal that has been received is processed to obtain a second optical signal including at least one preset wavelength; frequency modulation is performed on the second optical signal, and the second optical signal that has been modulated is output. In this way, by using this chip, the output of the optical signal of the preset wavelength and the preset frequency can be realized, so that it could be achieved that only a single broad-spectrum laser chip is used in the high-speed light emission module, which not only reduces the cost of using multiple high-speed laser chips, but also reduces the cost of using multiple high-speed laser chips. The inconsistency that may be caused by the spatial coupling of multiple lasers is reduced, and the coupling efficiency of the optical path is effectively improved.

### BRIEF DESCRIPTION OF THE DRAWINGS

FIG. 1 is a schematic diagram of the composition and structure of a modulation chip provided by an embodiment of the present disclosure;
FIG. 2 is a schematic structural diagram of a multiplexer-demultiplexer provided by an embodiment of the present disclosure;
FIG. 3 is a schematic structural diagram of a first-type coupler;
FIG. 4 is a schematic structural diagram of a second-type coupler;
FIG. 5 is a schematic structural diagram of a light emission module provided by an embodiment of the present disclosure;
FIG. 6 is another schematic structural diagram of a light emission module provided by an embodiment of the present disclosure;
FIG. 7 is a side view of an implementation of a light emission module provided by an embodiment of the present disclosure;
FIG. 8 is a side view of another implementation of a light emission module provided by an embodiment of the present disclosure.

### DETAILED DESCRIPTION

In order to make the purposes, technical solutions and advantages of the embodiments of the present disclosure clearer, the technical solutions in the embodiments of the present disclosure will be the clearly and completely described below with reference to the accompanying drawings in the embodiments of the present disclosure. The embodiments of the present disclosure are only a part of, rather than all embodiments of the present disclosure.

Based on the embodiments in the present disclosure, all other embodiments obtained by those of ordinary skill in the art without paying any creative work, belong to the protection scope of the present disclosure.

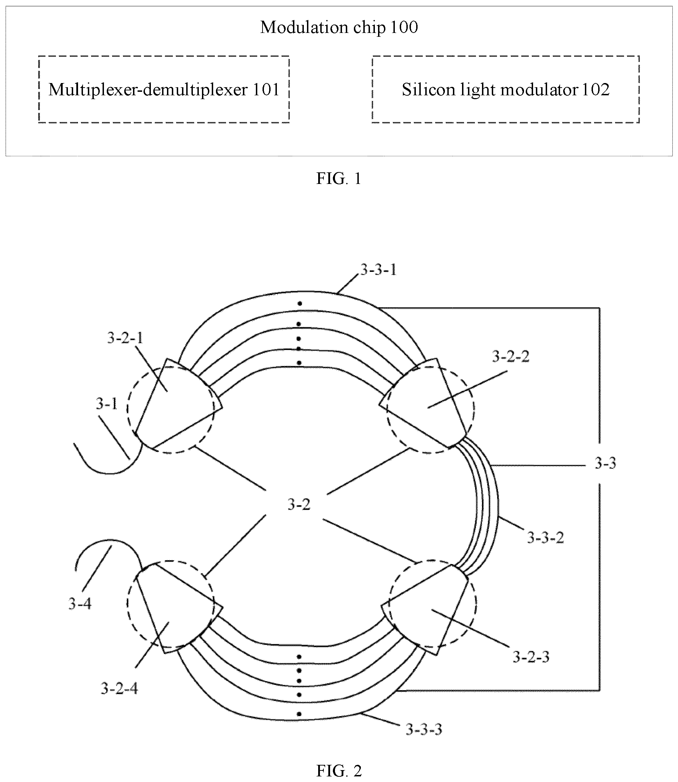

An embodiment of the present disclosure provides a modulation chip. FIG. 1 is a schematic diagram of the composition and structure of the modulation chip provided by the embodiment of the present disclosure. As shown in FIG. 1, the modulation chip 100 comprises a multiplexer-demultiplexer 101 and a silicon light modulator 102, wherein
the multiplexer-demultiplexer 101 is configured to receive a first optical signal, process the first optical signal to obtain a second optical signal including at least one preset wavelength, and output the second optical signal; the first optical signal is a light wave including at least one wavelength; and
the silicon light modulator 102 is configured to receive the second optical signal, perform frequency modulation on the second optical signal, and output the second optical signal that has been performed the frequency modulation.

Here, in order to realize the output of the desired optical signal of a specific wavelength, the modulation chip may be configured to be composed of a multiplexer-demultiplexer and a silicon light modulator.

The first optical signal is emitted by the light source, has a continuous spectrum, and comprises light waves having multiple wavelengths. The light source comprises: a semiconductor laser, a light-emitting diode, and the like. The semiconductor laser is a laser that uses a semiconductor material as a working substance, and is also a device that generates laser light. A light-emitting diode is a semiconductor electronic component that converts electrical energy into light energy. It should be noted that semiconductor lasers are mainly used as light sources in high-speed, large-capacity optical fiber communication systems.

In order to better illustrate the modulation chip in the embodiments of the present disclosure, here, taking the light source which is a semiconductor laser as an example for detailed description. Those skilled in the art should understand that, for the technical solutions of the embodiments of the present disclosure, the light source may be any other light source including a plurality of wavelengths, that is, the first optical signal is any light wave including multiple wavelengths.

Based on that, the first optical signal received by the multiplexer-demultiplexer is the first optical signal emitted from the semiconductor laser.

Here, the preset wavelength refers to the desired wavelength. Therefore, the second optical signal is an optical signal including at least one wavelength that is desired to be acquired.

It should be noted that the second optical signal and the first optical signal contain the same wavelength in part.

As an example, it is assumed that the first optical signal is composed of red light, yellow light, blue light, and green light; when it is desired to get 760-622nm (red wavelength), 597-577nm (blue wavelength), 435-390nm (violet wavelength), the first optical signal is processed by the multiplexer-demultiplexer, and thus a second optical signal comprising red light can be obtained, or a second optical signal comprising blue light can be obtained, or a second optical signal comprising both red light can be obtained.

Here, in order to transmit in optical fibers or other mediums, the optical signals including several wavelengths can be combined into one optical signal for transmission, that is, the second optical signal can be one optical signal including at least one preset wavelength.

It should be noted that the above-mentioned modulation chip can be used in the light emission module, and the light emission module can be made to emit light in a preset state by the processing of the modulation chip, here the preset state comprises a preset wavelength and a preset frequency.

As an example, after receiving the optical signal, the modulation chip outputs the optical signal as several optical signals having preset wavelengths, then combines these several optical signals having preset wavelengths into one optical signal, and then performs frequency modulation on said one optical signal, to output the optical signal that has been modulated.

Here, the optical signal having the preset wavelength refers to an optical signal having a specific wavelength that is expected to be acquired. The specific wavelength may be an ultraviolet light wavelength, an infrared light wavelength, a blue light wavelength, a red light wavelength, etc.; and the blue light, red light, etc. belong to visible light, and their wavelengths are about 400-760 nm. In general, lasers have the same wavelengths as ordinary light, ranging from infrared to ultraviolet. The wavelength of the laser is on the order of several thousand nanometers or less, and the closer the laser is to the ultraviolet region, the shorter the wavelength will be, which can be hundreds of nanometers or even smaller.

After receiving the optical signal, the multiplexer-demultiplexer processes the optical signal into one optical signal comprising at least one preset wavelength and outputs it to the silicon light modulator; the silicon light modulator receives the one optical signal, then the frequency modulation is performed on the one optical signal, to output the optical signal that has been performed the frequency modulation.

It should also be noted that the modulation chip is used for the light emission module, especially can be applied to the multi-channel silicon light high-speed emitting module.

Here, the above-mentioned frequency modulation of the optical signal is to modulate the optical signal into a signal of a specific frequency. The frequency modulation can be achieved by adding a radio frequency modulation signal and loading the radio frequency modulation signal on the light wave through a silicon optical modulation waveguide to realize modulation of the optical signal.

It should be noted that, in order to enable the optical signal emitted by the multiplexer-demultiplexer to enter the silicon light modulator without any loss, the multiplexer-demultiplexer and the silicon light modulator can be integrated on the same ceramic substrate, to reduce the attenuation that may be caused by optical signal transmission in the air, and reduce the cost of coupling.

In order to realize the separation and synthesis of optical signals, the multiplexer-demultiplexer can be a device for demultiplexing and multiplexing, comprising: at least one first-type coupler and at least one second-type coupler; the amount of the first-type couplers is the same with that of the second-type couplers;
the first-type coupler is configured to receive a first optical signal, and decompose the first optical signal into at least one optical signal of a preset wavelength; and
the second-type coupler is configured to receive the optical signal of the at least one preset wavelength, synthesize the optical signal of the at least one preset wavelength to obtain a second optical signal, and output the second optical signal.

The demultiplexing is to separate the lightwaves of various wavelengths; the multiplexing is to combine two or more lightwave signals of different wavelengths and couple them into the same waveguide of the optical path.

Here, in order to realize that the optical signals of different wavelengths obtained through the decomposition by the first-type coupler can selectively enter the second-type coupler, the multiplexer-demultiplexer further comprises an array waveguide which is located between the first-type coupler and the second-type coupler and is used to transmit the optical signal of the at least one preset wavelength.

The structure and working principle of the multiplexer-demultiplexer are introduced in detail as follows.

Fig. 2 is a structural schematic diagram of the multiplexer-demultiplexer provided by the embodiments of the present disclosure. As shown in Fig. 2, the multiplexer-demultiplexer is mainly composed of three parts, namely an input waveguide 3-1/an output waveguide 3-4, an array waveguide 3-3, and at least one coupler 3-2. The input waveguide/output waveguide and the array waveguide are both waveguides for transmitting optical signals.

Here, in FIG. 2, there are four couplers 3-2-1, 3-2-2, 3-2-3, 3-2-4; wherein the couplers 3-2-1 and 3-2-3 are the first-type couplers, and the couplers 3-2-2 and 3-2-4 are the second-type couplers. There are three array waveguides 3-3-1, 3-3-2, and 3-3-3. The first-type coupler and the second-type coupler are in a mirror image relationship.

As shown in FIG. 2, one end of the input waveguide 3-1 is connected to one side of the first-type coupler 3-2-1, and the other side of the first-type coupler 3-2-1 is connected to one side of the array waveguide 3-3-1; the other end of the array waveguide 3-3-1 is connected to one side of the second-type coupler 3-2-2. The other side of the second-type coupler 3-2-2 is connected to one end of the array waveguide 3-3-2, and the other end of the array waveguide 3-3-2 is connected to one side of the first-type coupler 3-2-3, the other side of the first-type coupler 3-2-3 is connected to one end of the array waveguide 3-3-3, and the other end of the array waveguide 3-3-3 is connected to one side of the second-type coupler 3-2-4, and the other side of the second-type coupler 3-2-4 is connected to one end of the output waveguide 3-4.

It should be noted that, in practical application, the number of couplers included in the multiplexer-demultiplexer can be set as required, for example, it can only include one first-type coupler and one second-type coupler, it may also include a plurality of first-type couplers and a plurality of second-type couplers, and the amount of the first-type couplers can be set to be the same with that of the second-type couplers. Of course, in order to achieve more precise wave selection, a plurality of first-type couplers and second-type couplers may be provided to achieve the selection of optical signals of desired wavelengths.

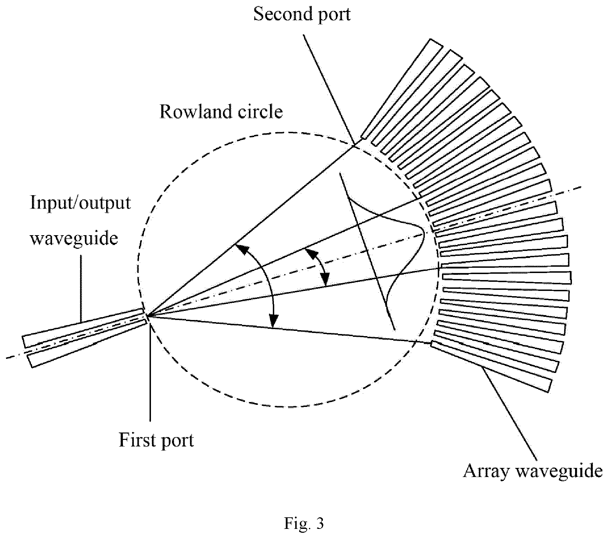

FIG. 3 is a schematic structural diagram of a first-type coupler, and the coupler may adopt a Rowland circle structure. As shown in FIG. 3, the Rowland circle structure comprises at least two ports, the first port of which is connected to the input/output waveguide, and the second port of which is connected to the array waveguide, and the input/output waveguide is used for transmitting the optical signal.

Here, in order to realize the demultiplexing function, the number of waveguides of the array waveguide should be set to be greater than the number of waveguides of the input waveguide. In practical applications, the selective output of optical signals of different lengths can be achieved by setting the number of waveguides.

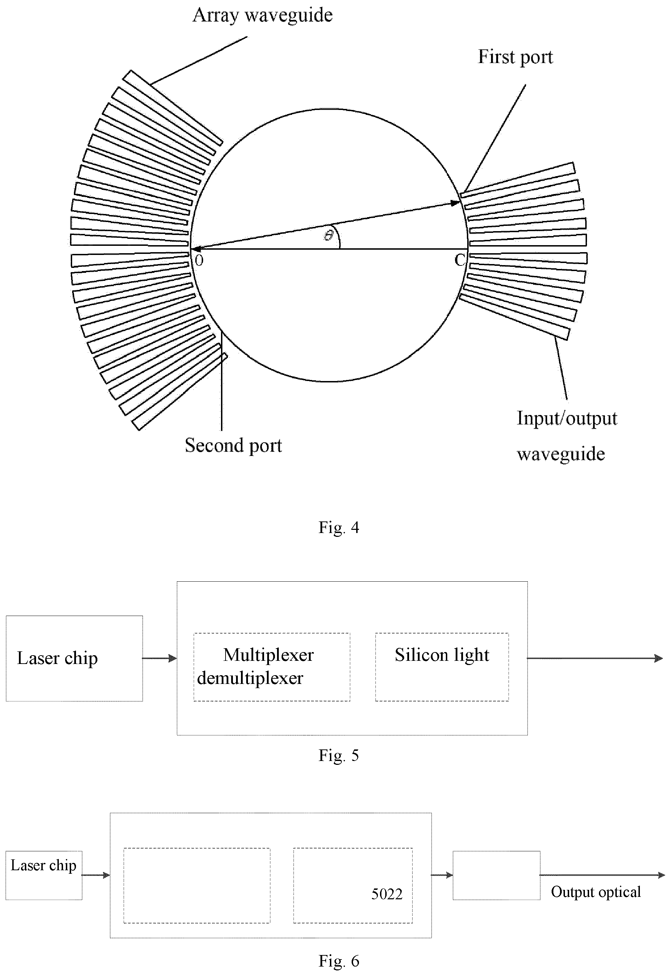

Correspondingly, FIG. 4 is a schematic structural diagram of the second-type coupler. As shown in FIG. 4, the first port of the two ports of the second-type coupler is connected to the output waveguide, and the second port of the two ports is connected to the array waveguide. In FIG. 4, the light emitted from the waveguide C undergoes reflective diffraction at the output end O of the array waveguide, and the optical signals of different wavelengths are diffracted to different angles θ, thereby being received by different output waveguides.

Based on this, the structure of the above-mentioned multiplexer-demultiplexer can be described as follows: the ports of the input waveguide 3-1/output waveguide 3-4 are located on the circumference of the Rowland circle, and the output array waveguide 3-3-1 is located at the circumference with the port of input waveguide 3-1 being the center and the diameter of the Rowland circle being the radius of circle.

Here, the array waveguide 3-3 corresponds to a transmission grating. The broad-spectrum optical signal with multiple wavelengths enters the input waveguide 3-1, and after entering the Rowland circle, equal power distribution is performed at the edge of the Rowland circle, and is coupled into the end face of the array waveguide 3-3-1 in equal phase. After the optical signal enters the array waveguide 3-3-1, since the adjacent array waveguides have the same length difference L, the output optical signal of a certain wavelength on the output port of the adjacent array waveguides has the same phase difference. The optical signals of different wavelengths have different phase differences, so the optical signals of different wavelengths interfere in the output Rowland circle and focus on different output array waveguides 3-3-2, that is, the wavelengths of the light signals of different array waveguides 3-3-2 are different. Based on this, spectral decomposition and selection of light waves can be achieved.

Correspondingly, after the light transmitted on the array waveguide 3-3-2 enters the Rowland circle, equal power distribution is carried out at the edge of the Rowland circle, and is coupled into the end face of the array waveguide 3-3-3 in the manner of equal phase. After the array waveguide 3-3-3 is transmitted, it enters the Rowland circle to realize multiplexing, and merges into a single output waveguide 3-4. Thereby, the output of the optical signal of the preset wavelength can be realized.

Here, after the optical signal of the preset wavelength is output through the output waveguide, it needs to enter the silicon light modulator for frequency modulation, and after the frequency modulation, a high-speed optical signal is obtained, and then output.

In practical applications, in order to make the optical signal of the preset wavelength directly aligned with the silicon light modulator, or in order to make the optical signal of the preset wavelength enter the silicon light modulator as losslessly as possible, it is necessary to couple the optical path of the multiplexer-demultiplexer and the silicon light modulator. In order to realize the optical path coupling, the modulation chip may further comprise a conducive component which is located between the multiplexer-demultiplexer and the silicon light modulator and is used for coupling the second multiplexer-demultiplexer output by the second multiplexer-demultiplexer into the silicon light modulator; and the conducive component comprises at least one lens and/or at least one waveguide.

Based on this, the optical path coupling mode of the multiplexer-demultiplexer and the silicon light modulator can be:

The optical path coupling is performed by arranging at least one waveguide or at least one lens between the multiplexer-demultiplexer and the silicon light modulator. The optical path coupling is to couple the optical signal into the optical device.

As an example, a waveguide may be set between the multiplexer-demultiplexer and the silicon light modulator, and the optical path coupling can be realized by the mode field adaptation of the waveguide; a lens may be arranged between the multiplexer-demultiplexer and the silicon light modulator, and the optical path coupling is realized by the refraction at the lens.

The modulation chip provided by the embodiments of the present disclosure processes the incident first optical signal into a second optical signal comprising at least one preset wavelength through a demultiplexer, thereby realizing the optical signal of a specific wavelength. After selecting the optical signal of a specific wavelength, the optical signal of the preset wavelength is coupled into the silicon light modulator for frequency modulation by setting a waveguide or a lens, so that the output of the optical signal having the preset wavelength and preset frequency can be realized.

Based on the modulation chip of the foregoing embodiments, an embodiment of the present disclosure further provides a light emission module implemented based on the modulation chip. The light emission module comprises the modulation chip, and the composition structure and functional principle of the modulation chip are the same with the structure and principle described in Figures 1-4.

FIG. 5 is a schematic structural diagram of an optical transmission module provided by an embodiment of the present disclosure. As shown in FIG. 5, the optical transmission module in an embodiment of the present disclosure further comprises a laser chip 501.

Specifically, the light emission module comprises a laser chip 501 and a modulation chip 502, wherein the laser chip 501 is located on the first side of the modulation chip 502;
the laser chip 501 is configured to transmit the first optical signal; and
the modulation chip 502 is configured to receive the first optical signal and output a second optical signal after frequency modulation; and the modulation chip 502 comprises a multiplexer-demultiplexer 5021 and a silicon light modulator 5022.

Here, the multiplexer-demultiplexer 5021 and the silicon light modulator 5022 are the multiplexer-demultiplexer and the silicon light modulator in the above mentioned embodiments.

It should be noted that the laser chip converts the high-speed electrical signal into a high-speed optical signal and output it, and the laser chip can be a broad-spectrum laser chip; in the above-mentioned light emission module, the high-speed optical signal is emitted by the laser chip, then enters the modulation chip, and then output an optical signal with a preset wavelength and a preset frequency after wave selection processing and frequency modulation processing of the modulation chip.

Optionally, as shown in Fig. 6, in order to output collimated light, the light emission module provided by the embodiments of the present disclosure can further include a collimating lens 503 which is located on the second side of the modulation chip 502 and is configured to receive the second optical signal after the frequency modulation and then change the second optical signal after the frequency modulation into collimated light for output, where the first side is different from the second side.

The modulation chip 502 is located between the laser chip 501 and the collimating lens 503.

Specifically, the laser chip 501 converts the high-speed electrical signal into a high-speed optical signal and output it; in the above-mentioned light emission module, after the high-speed optical signal is emitted by the laser chip 501, it enters the modulation chip 502, and after wave selection processing and frequency modulation processing of the chip 502 , an optical signal with a preset wavelength and a preset frequency is output, and then enters the collimating lens 503 and becomes collimated light for output.

Here, because the refractive index of silicon is very sensitive to temperature, the center wavelength of the multiplexer can shift without temperature control. For the accuracy of the wavelength, the light emission module provided by the embodiment of the present disclosure comprises a temperature controller which is used to control the temperature of the laser chip and the silicon light modulator, so as to keep the wavelength of the optical signal stable.

Further, the light emission module provided by the embodiment of the present disclosure may be implemented based on a hybrid integrated circuit, and further comprises a substrate, on which the above-mentioned chips, integrated circuits or micro-elements are mixed and assembled, and additionally packaged, and the substrate may be a ceramic substrate.

In practical applications, the laser chip and the modulation chip can be integrated on the same substrate, and the temperature controller is located on the lower surface of the substrate; the laser chip and the modulation chip are both located on the upper surface of the substrate. The temperature controller can be arranged below the laser chip and the modulation chip to control the temperature to ensure the accuracy of the wavelength.

Specifically, a temperature controller can be set under the substrate of the laser chip, and a temperature controller can be set under the substrate of the silicon light modulator; also a temperature controller can be set to perform temperature control on the laser chip and the modulation chip together.

In order to better realize the optical path coupling, the light emission module further comprises at least one converging lens; any one converging lens of the at least one converging lens is located between the laser chip and the modulation chip, for coupling the first optical signal emitted by the laser chip into the modulation chip.

It should be noted that, in the module manufacturing process, the laser chip and the demultiplexing and multiplexing modulation chip both can be in the form of passive patches, and such a design can simplify the coupling manufacturing cost of the optical path.

It should also be noted that the materials of the above-mentioned converging lens, collimating lens, etc. and the multi-faceted deflection prism can be glass, crystal, etc., and the materials used are not limited in the embodiments of the present disclosure.

Here, the relevant design parameters in the embodiments of the present disclosure can also be optimized according to different requirements.

In order to better illustrate the structure of the light emission module provided by the embodiments of the present disclosure, a specific description is given below through an example.

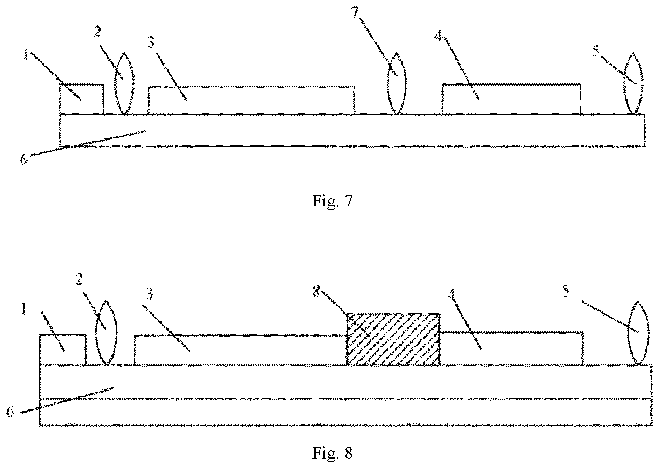

FIG. 7 is a side view of an implementation of a light emission module provided by an embodiment of the present disclosure. As shown in FIG. 7, the laser chip 1, the multiplexer-demultiplexer 3 and the silicon light modulator 4 are bonded to the same substrate 6 by patching without edges. A temperature controller is provided below the laser chip 1 and the silicon light modulator 4. The optical path coupling is performed between the laser chip 1 and the multiplexer-demultiplexer 3 through the lens 2. A lens 7 may also be provided between the multiplexer-demultiplexer 3 and the silicon light modulator 4, and the optical path coupling is performed through the lens 7. After the silicon light modulator 4 sends out the second optical signal that has been performed the frequency modulation, the second optical signal after the frequency modulation can be output as collimated light through the collimating lens 5.

Since the output of the multiplexer-demultiplexer 3 has only one waveguide, the optical path transmitted between the multiplexer-demultiplexer 3 and the silicon light modulator 4 can be coupled by means of lens coupling to achieve the best coupling efficiency.

The multiplexer-demultiplexer 3 can be designed with different functions according to different requirements. For example, it can be designed as a multiplexer-demultiplexer 3 with a wide temperature range, that is, it can constantly output multiple optical signals of specific wavelengths without a temperature controller. For example, it can also be designed as a multiplexer-demultiplexer 3 with temperature control. Under different temperature control conditions, it can output multiple optical signals of specific wavelengths with different wavelengths, so that the switching of different temperature and different wavelength bands can be realized on the same module.

FIG. 8 is a side view of another embodiment of the light emission module provided by the embodiment of the present disclosure. As shown in FIG. 8, the laser chip 1, the multiplexer-demultiplexer 3 and the silicon light modulator 4 are bonded to the same substrate 6 by the way of patching without edges; and the multiplexer-demultiplexer 3 and the silicon light modulator 4 are integrated into a whole, and is coupled to the multiplexing-demultiplexing modulation chip through the wave guide 8. At this time, it only needs to bind the laser chip 1 and the multiplexing-demultiplexing modulation chip to the same substrate. The second optical signal that has been performed the frequency modulation is sent out from the silicon light modulator 4, then may be output as collimated light through the collimating lens 5.

Optical path coupling can be performed between the laser chip 1 and the multiplexer-demultiplexer 3 through the lens 2.

Here, since the multiplexer-demultiplexer 3 and the silicon light modulator 4 both belong to the same kind of silicon-based substrate material, the two devices can be optically coupled by means of hybrid monolithic integration.

As an example, the multiplexer-demultiplexer 3 and the silicon light modulator 4 are respectively fabricated on the same silicon substrate. Then, a mode field matching region is formed between the two through a waveguide coupling structure or a mixed doping structure, so that the optical path coupling efficiency of the multiplexer-demultiplexer 3 and the silicon light modulator 4 can reach the optimum value.

Because the silicon light modulator 4 is a temperature-sensitive device, in this scheme, there needs a temperature controller under the substrate, and the laser chip 1 and the multiplexing and demultiplexing modulation chip are temperature controlled together to ensure the accuracy of the wavelength. Here, the multiplexing and demultiplexing modulation chip is an integrated structure of the multiplexer-demultiplexer 3 and the silicon light modulator 4 .

The light emission module provided by the embodiment of the present disclosure, by arranging a laser chip and a modulation chip on the same substrate, emits an optical signal with a continuous spectrum through the laser chip, and couples the optical signal into the modulation chip for processing, so as to realize the output of one optical signal with a specific wavelength and a specific frequency, and then convert it into a collimated light through a collimating lens for emission. This design method simplifies the coupling method of the optical path, reduces the fabrication cost of the light emission module, and has important application prospects in the design and fabrication of the light emission module.

The above is only the specific embodiments of the present invention, but protection scope of the present invention is not limited thereto, any person skilled in the art who is familiar with the technical scope disclosed by the present invention can easily think of change or substitutions which should be covered within the protection scope of the present invention. Therefore, the protection scope of the present invention should be based on the protection scope of the claims. It is to be understood that reference throughout the specification to "one embodiment" or "an embodiment" means that a particular feature, structure or characteristic associated with the embodiment is included in at least one embodiment of the present invention.

Thus, phases of "in one embodiment" or "in an embodiment" in various places throughout the specification are not necessarily referring to the same embodiment. Furthermore, the particular features, structures or characteristics may be combined in any suitable manner in one or more embodiments. It should be understood that, in various embodiments of the present disclosure, the order of the above-mentioned processes does not imply an execution sequence, and the execution sequence of each process should be determined by its functions and internal logic, rather than the embodiments of the present disclosure. The above-mentioned serial numbers of the embodiments of the present disclosure are only for description, and do not priority of the embodiments.

It should be noted that the terms "comprising", "including", "having" or any other variation thereof herein are intended to encompass a non-exclusive inclusion such that a process, method, article or device comprising a series of elements not only comprise those elements, but also other elements not expressly listed or inherent to such a process, method, article or apparatus. Without further limitation, an element stated by the phrase "comprising a..." does not preclude the presence of additional identical elements in a process, method, article or apparatus that comprises the element.

## Claims

1. A modulation chip (100), wherein the modulation chip (100) comprises a multiplexer-demultiplexer (101) and a silicon light modulator (102),
wherein the multiplexer-demultiplexer (101) is configured to receive a first optical signal, process the first optical signal to obtain one second optical signal including at least one preset wavelength, and output the one second optical signal; the first optical signal is a light wave including at least one wavelength; and
**characterized in that**
the silicon light modulator (102) is configured to receive the one second optical signal, perform frequency modulation on the one second optical signal, and output the one second optical signal on which the frequency modulation has been performed.

2. The modulation chip (100) of claim 1, **characterized in that**
the multiplexer-demultiplexer (101) comprises at least one first-type coupler (3-2-1, 3-2-3) and at least one second-type coupler (3-2-2, 3-2-4); an amount of the first-type coupler (3-2-1, 3-2-3) is the same with that of the second-type coupler (3-2-2, 3-2-4);
the first-type coupler (3-2-1, 3-2-3) is configured to receive the first optical signal, and decompose the first optical signal into an optical signal of at least one preset wavelength; and
the second-type coupler (3-2-2, 3-2-4) is configured to receive the optical signal of the at least one preset wavelength, synthesize the optical signal of the at least one preset wavelength to obtain the second optical signal, and output the second optical signal.

3. The modulation chip (100) of claim 1, **characterized in that** the multiplexer-demultiplexer (101) further comprises an array waveguide (3-3) which is located between the first-type coupler (3-2-1, 3-2-3) and the second-type coupler (3-2-2, 3-2-4) and is configured to transmit the optical signal of the at least one preset wavelength, wherein the first-type coupler (3-2-1, 3-2-3) and the second-type coupler (3-2-2, 3-2-4) are mirror images of each other.

4. The modulation chip (100) of claim 3, **characterized in that**
the first-type coupler (3-2-1, 3-2-3) and the second-type coupler (3-2-2, 3-2-4) both adopt a Rowland circle structure which comprises at least two ports;
a first port of the two ports of the first-type coupler (3-2-1, 3-2-3) or the second-type coupler (3-2-2, 3-2-4) is connected to an input waveguide (3-1)/output waveguide (3-4);
a second port of the two ports of the first-type coupler (3-2-1, 3-2-3) or the second-type coupler (3-2-2, 3-2-4) is connected to the array waveguide (3-3); and
the input waveguide (3-1)/output waveguide (3-2) is configured to transmit optical signals.

5. The modulation chip (100) of claim 1, **characterized in that** the modulation chip (100) further comprises a conductive component which is located between the multiplexer-demultiplexer (101) and the silicon light modulator (102) and is configured to couple the second optical signal output by the multiplexer-demultiplexer (101) into the silicon light modulator (102).

6. The modulation chip (100) of claim 5, **characterized in that** the conducive component comprises at least one lens and/or at least one waveguide.

7. A light emission module, **characterized in that** the light emission module comprises the modulation chip (502) according to any one of claims 1-6.

8. The light emission module of claim 7, **characterized in that** the light emission module further comprises a laser chip (1, 501), a temperature controller and a substrate (6);
the laser chip (1, 501) and the modulation chip (502) both are located on an upper surface of the substrate (6);
the temperature controller is located on a lower surface of the substrate (6); and
the laser chip (1, 501) is located on a first side of the modulation chip (502).

9. The light emission module of claim 8, **characterized in that**
the laser chip (1, 501) is configured to transmit a first optical signal;
the modulation chip (502) is configured to receive the first optical signal and output a second optical signal that has been performed by frequency modulation of said first optical signal; and
the temperature controller is configured to control temperature of the laser chip (1, 501) and the silicon light modulator (5022, 4), so as to keep wavelength of the optical signal stable.

10. The light emission module of any one of claims 8-9, **characterized in that** the light emission module further comprises a collimating lens (5, 503);
the collimating lens (5, 503) is located on a second side of the modulation chip (502), and is configured to receive the second optical signal on which the frequency modulation has been performed, and convert the second optical signal on which the frequency modulation has been performed into collimated light for output; and
the first side is different from the second side.

11. The light emission module of any one of claims 8-9, **characterized in that** the light emission module further comprises at least one converging lens (2, 7); and
the converging lens (2, 7) is located between the laser chip (1, 501) and the modulation chip (502), and is configured to couple the first optical signal emitted by the laser chip (1, 501) into the modulation chip (502).

## Patentansprüche

1. Modulationschip (100), wobei der Modulationschip (100) einen Multiplexer-Demultiplexer (101) und einen Silizium-Lichtmodulator (102) umfasst,
wobei der Multiplexer-Demultiplexer (101) so konfiguriert ist, dass er ein erstes optisches Signal empfängt, das erste optische Signal verarbeitet, um ein zweites optisches Signal mit mindestens einer voreingestellten Wellenlänge zu erhalten, und das eine zweite optische Signal ausgibt;
wobei das erste optische Signal eine Lichtwelle mit mindestens einer Wellenlänge ist; und
**dadurch gekennzeichnet, dass**
der Silizium-Lichtmodulator (102) so konfiguriert ist, dass er das eine zweite optische Signal empfängt, eine Frequenzmodulation auf dem einen zweiten optischen Signal durchführt und das eine zweite optische Signal ausgibt, auf dem die Frequenzmodulation durchgeführt wurde.

2. Modulationschip (100) nach Anspruch 1, **dadurch gekennzeichnet, dass**
der Multiplexer-Demultiplexer (101) mindestens einen Koppler vom ersten Typ (3-2-1, 3-2-3) und mindestens einen Koppler vom zweiten Typ (3-2-2, 3-2-4) umfasst; eine Anzahl der Koppler des ersten Typs (3-2-1, 3-2-3) gleich der Anzahl der Koppler des zweiten Typs (3-2-2, 3-2-4) ist;
der Koppler des ersten Typs (3-2-1, 3-2-3) so konfiguriert ist, dass er das erste optische Signal empfängt und das erste optische Signal in ein optisches Signal von mindestens einer voreingestellten Wellenlänge zerlegt; und
der Koppler des zweiten Typs (3-2-2, 3-2-4) so konfiguriert ist, dass er das optische Signal der mindestens einen voreingestellten Wellenlänge empfängt, das optische Signal der mindestens einen voreingestellten Wellenlänge synthetisiert, um das zweite optische Signal zu erhalten, und das zweite optische Signal ausgibt.

3. Modulationschip (100) nach Anspruch 1, **dadurch gekennzeichnet, dass** der Multiplexer-Demultiplexer (101) ferner einen Array-Wellenleiter (3-3) umfasst, der sich zwischen dem Koppler des ersten Typs (3-2-1, 3-2-3) und dem Koppler des zweiten Typs (3-2-2, 3-2-4) befindet und so konfiguriert ist, dass er das optische Signal der mindestens einen voreingestellten Wellenlänge überträgt, wobei der Koppler (3-2-1, 3-2-3) des ersten Typs und der Koppler (3-2-2, 3-2-4) des zweiten Typs Spiegelbilder voneinander sind.

4. Modulationschip (100) nach Anspruch 3, **dadurch gekennzeichnet, dass**
der Koppler des ersten Typs (3-2-1, 3-2-3) und der Koppler des zweiten Typs (3-2-2, 3-2-4) beide eine Rowland-Kreisstruktur aufweisen, die mindestens zwei Anschlüsse umfasst;
ein erster Anschluss der beiden Anschlüsse des Kopplers vom ersten Typ (3-2-1, 3-2-3) oder des Kopplers vom zweiten Typ (3-2-2, 3-2-4) mit einem Eingangswellenleiter (3-1)/Ausgangswellenleiter (3-4) verbunden ist;
ein zweiter Anschluss der beiden Anschlüsse des Kopplers vom ersten Typ (3-2-1, 3-2-3) oder des Kopplers vom zweiten Typ (3-2-2, 3-2-4) mit dem Array-Wellenleiter (3-3) verbunden ist; und
der Eingangswellenleiter (3-1)/Ausgangswellenleiter (3-2) zum Übertragen optischer Signale konfiguriert ist.

5. Modulationschip (100) nach Anspruch 1, **dadurch gekennzeichnet, dass** der Modulationschip (100) ferner eine leitfähige Komponente umfasst, die sich zwischen dem Multiplexer-Demultiplexer (101) und dem Silizium-Lichtmodulator (102) befindet und so konfiguriert ist, dass sie das zweite optische Signal, das vom Multiplexer-Demultiplexer (101) ausgegeben wird, in den Silizium-Lichtmodulator (102) koppelt.

6. Modulationschip (100) nach Anspruch 5, **dadurch gekennzeichnet, dass** die leitfähige Komponente mindestens eine Linse und/oder mindestens einen Wellenleiter umfasst.

7. Lichtemissionsmodul, **dadurch gekennzeichnet, dass** das Lichtemissionsmodul den Modulationschip (502) gemäß einem der Ansprüche 1 bis 6 umfasst.

8. Lichtemissionsmodul nach Anspruch 7, **dadurch gekennzeichnet, dass** das Lichtemissionsmodul ferner einen Laserchip (1, 501), einen Temperaturregler und ein Substrat (6) umfasst;
wobei der Laserchip (1, 501) und der Modulationschip (502) beide auf einer Oberseite des Substrats (6) angeordnet sind;
der Temperaturregler auf einer unteren Fläche des Substrats (6) angeordnet ist; und
der Laserchip (1, 501) auf einer ersten Seite des Modulationschips (502) angeordnet ist.

9. Lichtemissionsmodul nach Anspruch 8, **dadurch gekennzeichnet, dass**
der Laserchip (1, 501) so konfiguriert ist, dass er ein erstes optisches Signal sendet;
der Modulationschip (502) so konfiguriert ist, dass er das erste optische Signal empfängt und ein zweites optisches Signal ausgibt, das durch Frequenzmodulation des ersten optischen Signals erzeugt wurde; und
der Temperaturregler so konfiguriert ist, dass er die Temperatur des Laserchips (1, 501) und des Silizium-Lichtmodulators (5022, 4) so steuert, dass die Wellenlänge des optischen Signals stabil bleibt.

10. Lichtemissionsmodul nach einem der Ansprüche 8 bis 9, **dadurch gekennzeichnet, dass** das Lichtemissionsmodul ferner eine Kollimationslinse (5, 503) umfasst;
die Kollimationslinse (5, 503) auf einer zweiten Seite des Modulationschips (502) angeordnet ist und so konfiguriert ist, dass sie das zweite optische Signal, auf das die Frequenzmodulation durchgeführt wurde, empfängt und das zweite optische Signal, auf das die Frequenzmodulation durchgeführt wurde, in kollimiertes Licht zur Ausgabe umwandelt; und
die erste Seite sich von der zweiten Seite unterscheidet.

11. Lichtemissionsmodul nach einem der Ansprüche 8 bis 9, **dadurch gekennzeichnet, dass** das Lichtemissionsmodul ferner mindestens eine Sammellinse (2, 7) umfasst; und
die Sammellinse (2, 7) zwischen dem Laserchip (1, 501) und dem Modulationschip (502) angeordnet ist und so konfiguriert ist, dass sie das vom Laserchip (1, 501) emittierte erste optische Signal in den Modulationschip (502) koppelt.

## Revendications

1. Puce de modulation (100), dans laquelle la puce de modulation (100) comprend un multiplexeur-démultiplexeur (101) et un modulateur de lumière au silicium (102),
dans lequel le multiplexeur-démultiplexeur (101) est configuré pour recevoir un premier signal optique, pour traiter le premier signal optique afin d'obtenir un deuxième signal optique comprenant au moins une longueur d'onde prédéfinie, et pour émettre le deuxième signal optique; le premier signal optique est une onde lumineuse comprenant au moins une longueur d'onde; et
caractérisée en ce
le modulateur de lumière au silicium (102) est configuré pour recevoir le deuxième signal optique, pour effectuer une modulation de fréquence sur le deuxième signal optique et pour émettre le deuxième signal optique sur lequel la modulation de fréquence a été effectuée.

2. Puce de modulation (100) selon la revendication 1, **caractérisée en ce que**
le multiplexeur-démultiplexeur (101) comprend au moins un coupleur de premier type (3-2-1, 3-2-3) et au moins un coupleur de second type (3-2-2, 3-2-4); le nombre de coupleur de premier type (3-2-1, 3-2-3) est identique à celui du coupleur de second type (3-2-2, 3-2-4);
le coupleur de premier type (3-2-1, 3-2-3) est configuré pour recevoir le premier signal optique et pour décomposer le premier signal optique en un signal optique d'au moins une longueur d'onde prédéfinie; et
le coupleur de second type (3-2-2, 3-2-4) est configuré pour recevoir le signal optique d'au moins une longueur d'onde prédéfinie, pour synthétiser le signal optique d'au moins une longueur d'onde prédéfinie afin d'obtenir le deuxième signal optique, et pour émettre le deuxième signal optique.

3. Puce de modulation (100) selon la revendication 1, **caractérisée en ce que** le multiplexeur-démultiplexeur (101) comprend en outre un guide d'ondes en réseau (3-3) qui est situé entre le coupleur de premier type (3-2-1, 3-2-3) et le coupleur de second type (3-2-2, 3-2-4) et est configuré pour transmettre le signal optique de l'au moins une longueur d'onde prédéfinie, le coupleur de premier type (3-2-1, 3-2-3) et le coupleur de second type (3-2-2, 3-2-4) étant des images en miroir l'un de l'autre.

4. Puce de modulation (100) selon la revendication 3, **caractérisée en ce que**
le coupleur de premier type (3-2-1, 3-2-3) et le coupleur de second type (3-2-2, 3-2-4) adoptent tous deux une structure en cercle de Rowland qui comprend au moins deux ports;
le premier port des deux ports du coupleur de premier type (3-2-1, 3-2-3) ou du coupleur de second type (3-2-2, 3-2-4) est connecté à un guide d'ondes d'entrée (3-1) / guide d'ondes de sortie (3-4);
le second port des deux ports du coupleur de premier type (3-2-1, 3-2-3) ou du coupleur de second type (3-2-2, 3-2-4) est connecté au guide d'ondes en réseau (3-3); et
le guide d'onde d'entrée (3-1) / guide d'onde de sortie (3-2) est configuré pour transmettre des signaux optiques.

5. Puce de modulation (100) selon la revendication 1, **caractérisée en ce que** la puce de modulation (100) comprend en outre un composant conducteur qui est situé entre le multiplexeur-démultiplexeur (101) et le modulateur de lumière au silicium (102) et est configuré pour coupler le second signal optique émis par le multiplexeur-démultiplexeur (101) dans le modulateur de lumière au silicium (102).

6. Puce de modulation (100) selon la revendication 5, **caractérisée en ce que** le composant conducteur comprend au moins une lentille et/ou au moins un guide d'ondes.

7. Module émetteur de lumière, **caractérisé en ce que** le module émetteur de lumière comprend la puce de modulation (502) selon l'une des revendications 1 à 6.

8. Module émetteur de lumière selon la revendication 7, **caractérisé en ce que** le module émetteur de lumière comprend en outre une puce laser (1, 501), un régulateur de température et un substrat (6);
la puce laser (1, 501) et la puce de modulation (502) sont toutes deux situées sur une surface supérieure du substrat (6);
le régulateur de température est situé sur une surface inférieure du substrat (6); et
la puce laser (1, 501) est située sur un premier côté de la puce de modulation (502).

9. Module émetteur de lumière selon la revendication 8, **caractérisé en ce que**
la puce laser (1, 501) est configurée pour transmettre un premier signal optique;
la puce de modulation (502) est configurée pour recevoir le premier signal optique et émettre un second signal optique qui a été réalisé par modulation de fréquence dudit premier signal optique; et
le régulateur de température est configuré pour régler la température de la puce laser (1, 501) et du modulateur de lumière au silicium (5022, 4), de manière à maintenir stable la longueur d'onde du signal optique.

10. Module émetteur de lumière selon l'une quelconque des revendications 8 à 9, **caractérisé en ce que** le module émetteur de lumière comprend en outre une lentille de collimation (5, 503);
la lentille de collimation (5, 503) est située sur un second côté de la puce de modulation (502) et est configurée pour recevoir le second signal optique sur lequel la modulation de fréquence a été effectuée et pour convertir le second signal optique sur lequel la modulation de fréquence a été effectuée en lumière collimatée à émettre; et
le premier côté est différent du second côté.

11. Module émetteur de lumière selon l'une quelconque des revendications 8 à 9, **caractérisé en ce que** le module émetteur de lumière comprend en outre au moins une lentille convergente (2, 7); et
la lentille convergente (2, 7) est située entre la puce laser (1, 501) et la puce de modulation (502) et est configurée pour coupler le premier signal optique émis par la puce laser (1, 501) dans la puce de modulation (502).
